# EUROPEAN PATENT APPLICATION

(11) **EP 4 822 968 A1**
(43) Date of publication of application: **14.10.2026**
(21) Application number: 24899997.1
(22) Date of filing: 06.12.2024
(51) Int. Cl.: H02M 1/088

(54) **POWER SEMICONDUCTOR MODULE, HALF-BRIDGE POWER MODULE, AND VEHICLE**

(30) Priority: 08.12.2023 CN 202323357951 U
(71) Applicant: Shanghai Lixiang Automobile Co., Ltd., Shanghai 201800 (CN)
(72) Inventor: HU, Bao, Shanghai 201800 (CN); QIAN, Yichen, Shanghai 201800 (CN); ZHANG, Lin, Shanghai 201800 (CN)
(74) Representative: Michalski Hüttermann & Partner mbB
(86) International application number: PCT/CN2024/137581
(87) International publication number: WO 2025/119364

(57) **Abstract**

The present application relates to the technical field of circuits, and particularly relates to a power semiconductor module, a half-bridge power module, and a vehicle. The power semiconductor module comprises: a triode and at least one diode, wherein a drain electrode of the triode is connected to a negative electrode of the diode, a source electrode of the triode is connected to a positive electrode of the diode, and the area occupied by the at least one diode is larger than the area occupied by the triode. The present application which uses the solution can reduce the loss of a power semiconductor module, and improves the usage efficiency of the power semiconductor module.

## Description

This application claims the priority of the Chinese Patent application filed on December 8, 2023 before the CNIPA, China National Intellectual Property Administration with the application number of 202323357951.8, and the title of "POWER SEMICONDUCTOR MODULE AND HALF-BRIDGE POWER MODULE", which is incorporated herein in its entirety by reference.

### FIELD

The present application relates to the technical field of circuits, and in particular, to a power semiconductor module, a half-bridge power module, and a vehicle.

### BACKGROUND

Power semiconductors are semiconductor products that are emerged alongside the application of electric power and are built upon the foundation of power electronics technology. The power semiconductors are core components in main circuits of various electronic devices or power systems, and can be directly used for processing and conversion of electric energy. However, in the related art, the power semiconductor modules are all designed for driving functions, where the area of an internal transistor is greater than that of the diode connected in parallel with the transistor, resulting in a higher on-state voltage drop of the diode. Since the duration of current flow through the diode is significantly longer than that through the transistor during operation of the power semiconductor module, the power semiconductor modules suffer from higher loss and lower operating efficiency.

### SUMMARY

The present application provides a power semiconductor module, a half-bridge power module, and a vehicle, to mainly reduce the loss of the power semiconductor module and improve the operating efficiency of the power semiconductor module.

In one aspect, the present application provides a power semiconductor module, which includes a transistor and at least one diode, wherein
a drain of the transistor is connected to a cathode of the diode, and a source of the transistor is connected to an anode of the diode; and
an area occupied by the at least one diode is greater than an area occupied by the transistor.

Optionally, in an embodiment of the present application, a number of the diode is plural.

Optionally, in an embodiment of the present application, the plurality of diodes are placed around the transistor; wherein one diode is disposed in any direction of the transistor, and if the diodes are disposed in all directions of the transistor, a diode is disposed in a direction away from the transistor relative to any diode disposed in any direction.

Optionally, in an embodiment of the present application, the diode is connected in parallel with the transistor through at least one bonding wire.

Optionally, in an embodiment of the present application, the power semiconductor module further includes a printed circuit board, wherein
the at least one diode and the transistor are disposed on a copper substrate of the printed circuit board.

Optionally, in an embodiment of the present application, the printed circuit board further includes a gate region, a source region, and a drain region;
the gate region, the source region, and the drain region are all disposed on the copper substrate;
the drain of the transistor and the cathode of the diode are connected to the drain region through the copper substrate;
the source of the transistor and the anode of the diode are connected to the source region through aluminum wires; and
a gate of the transistor is connected to the gate region through an aluminum wire.

Optionally, in an embodiment of the present application, the power semiconductor module further includes a gate pin, a source pin, and a drain pin, wherein
the gate pin is disposed in the gate region, the source pin is disposed in the source region, and the drain pin is disposed in the drain region.

According to another aspect, the present application provides a half-bridge power module, including a first power semiconductor module and a second power semiconductor module, wherein the first power semiconductor module and the second power semiconductor module each adopt the power semiconductor module according to any one of first aspects, and
the first power semiconductor module and the second power semiconductor module are connected in series.

Optionally, in an embodiment of the present application, a source of a transistor and an anode of a diode in the first power semiconductor module are connected to a drain region of the second power semiconductor module through bonding wires.

Optionally, in an embodiment of the present application, the half-bridge power module further includes a positive terminal, a negative terminal, and a phase power terminal, wherein
the positive terminal is connected to a drain region of the first power semiconductor module;
the phase power terminal is connected to the drain region of the second power semiconductor module; and
the negative terminal is connected to a source region of the second power semiconductor module.

Optionally, in an embodiment of the present application, the half-bridge power module further includes an adapter copper busbar and a capacitor, wherein
the first power semiconductor module and the second power semiconductor module are positioned in a first plane, the adapter copper busbar is positioned in a second plane, and the first plane is parallel to the second plane; and
one end of the adapter copper busbar is connected to the negative terminal, the other end of the adapter copper busbar is connected to a negative electrode of the capacitor and the other end of the adapter copper busbar is close to the positive terminal, and the positive terminal is connected to a positive electrode of the capacitor; or, one end of the adapter copper busbar is connected to the positive terminal, the other end of the adapter copper busbar is connected to the positive electrode of the capacitor and the other end of the adapter copper busbar is close to the negative terminal, and the negative terminal is connected to the negative electrode of the capacitor.

In conclusion, according to the power semiconductor module provided by the embodiments of the present application, during use of the power semiconductor module, when the duration of current flow through the diode remains unchanged, a lower on-state voltage drop of the diode results in lower loss caused by the current flow through the diode, and thus lower loss of the power semiconductor module. Therefore, by configuring the area occupied by the at least one diode to be greater than the area occupied by the transistor, the on-state voltage drop of the diode is reduced, thereby reducing the loss of the power semiconductor module, improving the operating efficiency of the power semiconductor module, and increasing the power generation efficiency.

According to another aspect, the present application provides a motor controller, including the half-bridge power module according to any one of the above aspects.

According to another aspect, the present application provides an electric drive system, including the motor controller according to any one of the above aspects.

According to another aspect, the present application provides a vehicle, including the electric drive system according to any one of the above aspects.

Additional aspects and advantages of the present application will be set forth in part in the description that follows, and in part will be obvious from the description, or may be learned through practice of the present application.

The above description is merely an overview of the technical solutions of the present application. To enable a clearer understanding of the technical means of the present application, which may be implemented in accordance with the content of the specification, and to make the above-mentioned and other objects, features, and advantages of the present application more apparent and comprehensible, specific embodiments of the present application are set forth below.

### BRIEF DESCRIPTION OF THE DRAWINGS

In order to more clearly illustrate the technical solutions in the embodiments of the present application or in the prior art, the accompanying drawings required for describing the embodiments or the prior art will be briefly introduced below. It is obvious that the drawings described below are only some embodiments of the present application, and those skilled in the art can also obtain other drawings based on these drawings without any creative effort.
FIG. 1 is a circuit diagram of a power semiconductor module according to the embodiments of the present application;
FIG. 2 is a top view of a half-bridge power module according to the embodiments of the present application;
FIG. 3 is a circuit diagram of a half-bridge power module according to the embodiments of the present application; and
FIG. 4 is a side view of a half-bridge power module according to the embodiments of the present application.

### DETAILED DESCRIPTION

In order to make the objects, the technical solutions and the advantages of the embodiments of the present application clearer, the technical solutions of the embodiments of the present application will be clearly and completely described below with reference to the drawings of the embodiments of the present application. Apparently, the described embodiments are merely certain embodiments of the present application, rather than all of the embodiments. All of the other embodiments that a person skilled in the art obtains on the basis of the embodiments of the present application without paying creative work fall within the protection scope of the present application.

The following describes the embodiments of the present application in detail. Examples of these embodiments are illustrated in the accompanying drawings, wherein the same or similar reference numerals consistently denote the same or similar components or components with the same or similar functions. The embodiments described below with reference to the accompanying drawings are exemplary and are intended only to explain the present application, and should not be construed as limiting the present application. On the contrary, the embodiments of the present application include all variations, modifications, and equivalents falling within the spirit and scope of the appended claims.

The present application will be described in detail below with reference to specific embodiments.

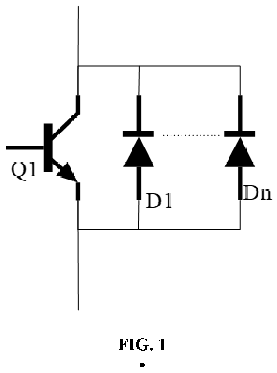

FIG. 1 is a circuit diagram of a power semiconductor module according to the embodiments of the present application. As shown in FIG. 1, the power semiconductor module includes a transistor Q1 and at least one diode (D1 to Dn, and n is a positive integer), wherein a drain of the transistor Q1 is connected to a cathode of the diode, and a source of the transistor Q1 is connected to an anode of the diode; and an area occupied by the at least one diode is greater than an area occupied by the transistor Q1.

According to some embodiments, the transistor Q1 includes but is not limited to a Bipolar Junction Transistor (BJT), a Gate Turn-off Thyristor (GTO), an Insulated Gate Bipolar Transistor (IGBT), an Integrated Gate Commuted Transistor (IGCT), a Metal Oxide Semiconductor Field Effect Transistor (MOSFET or MOS), a Gallium Nitride Field Effect Transistor (GaNFET), and the like.

It should be noted that for some range-extended drive systems, the drive system is provided with a generator and a controller with a power generation function. The controller with the power generation function has high requirements for switching loss and on-state voltage drop. During use of the power semiconductor module, when the duration of current flow through the diode remains unchanged, a lower on-state voltage drop of the diode results in lower loss caused by the current flow through the diode, and thus results in lower loss of the power semiconductor module. In the related art, an area of the transistor inside the power semiconductor module is greater than an area of the diode connected in parallel with the transistor, leading to a higher on-state voltage drop of the diode. In contrast, in the embodiments of the present application, by configuring the area occupied by the at least one diode to be greater than the area occupied by the transistor Q1, the on-state voltage drop of the diode is reduced, thereby reducing the loss of the power semiconductor module. Moreover, the duration of current flow through the diode is much longer than that through the transistor Q1, thereby reducing the loss of the power semiconductor module significantly and improving the operating efficiency of the power semiconductor module, such that the power semiconductor module can meet the performance requirements of the drive system.

In addition, it should be noted that for some controllers without the power generation function in the related art, no improvement is needed for the power semiconductor module.

In the process of configuring the area occupied by the at least one diode to be greater than the area occupied by the transistor Q1, the area occupied by the transistor Q1 can be determined first, and if a diode having an area occupied greater than that of the transistor Q1 is present, the diode is connected in parallel with the transistor Q1. Conversely, if a diode having an area occupied greater than that of the transistor Q1 is absent, a number of diodes required to be connected in parallel with the transistor Q1 can be determined according to areas occupied by the diodes of different models, wherein it is not required to use diodes of the same model; and diodes of different models may be connected in parallel with the transistor Q1, provided that a total area occupied by all diodes is greater than the area occupied by the transistor Q1.

Then, on the basis that the area occupied by all diodes is greater than the area occupied by the transistor Q1, other diodes may be further configured to be connected in parallel with the transistor Q1 to further reduce the on-state voltage drop of the diodes. Areas occupied by other diodes are not defined, but the total area occupied by all diodes is greater, the on-state voltage drop of the diodes is lower, and the operating efficiency of the power semiconductor module is higher. The specific model and number of the diodes can be determined according to an actual application scenario.

Furthermore, the area occupied by the transistor is greater, the price of the transistor is higher, and the switching loss and power are greater. According to the actual application scenario, a transistor occupying a smaller area may be used while meeting the power requirements of the power semiconductor module, thereby reducing the overall cost and loss of the power semiconductor module.

Optionally, in an embodiment of the present application, a plurality of diodes are placed around the transistor Q1, wherein one diode is disposed in any direction of the transistor Q1, and if the diodes are disposed in all directions of the transistor Q1, a diode is disposed in a direction away from the transistor Q1 relative to any diode disposed in any direction.

According to some embodiments, the transistor Q1 is placed in the center, the layout that the plurality of diodes are placed around the transistor Q1 can improve a current sharing effect of the diodes, further reduce the loss of the diodes, reduce the loss of the entire power semiconductor module, improve the operating efficiency of the power semiconductor module, and increase power generation efficiency.

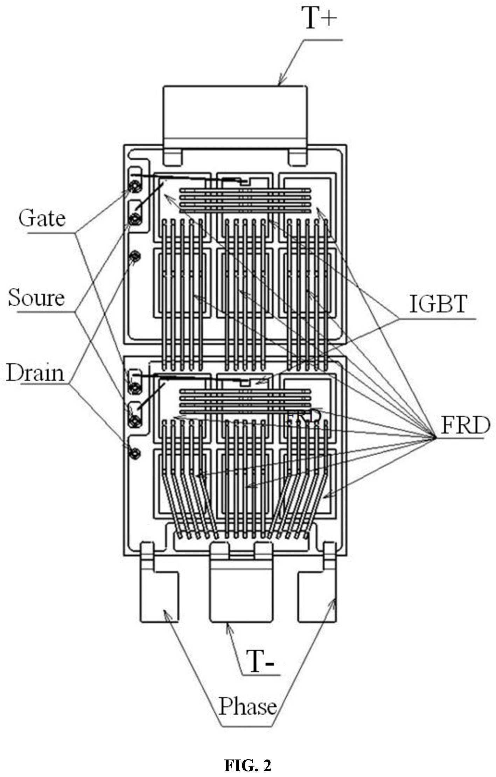

A scenario is taken as an example. FIG. 2 is a top view of a half-bridge power module according to the embodiments of the present application. As shown in FIG. 2, the half-bridge power module includes two power semiconductor modules, a power semiconductor module of an upper half-bridge is a first power semiconductor module, a power semiconductor module of a lower half-bridge is a second power semiconductor module, and the first power semiconductor module and the second power semiconductor module each adopts a solution that a single IGBT chip is connected in parallel with five Fast Recovery Diode (FRD) chips, wherein the FRD chips are placed on the left, the right, under, the lower left, and the lower right of the IGBT chip, respectively.

Optionally, in an embodiment of the present application, the diode is connected in parallel with the transistor Q1 through at least one bonding wire.

A scenario is taken as an example. As shown in FIG. 2, a number of bonding wires may be four, and may also be five.

It should be noted that the number of bonding wires is greater, the current sharing effect of the diode is stronger.

Optionally, in an embodiment of the present application, the power semiconductor module further includes a printed circuit board, wherein the plurality of diodes and the transistor Q1 are disposed on a copper substrate of the printed circuit board.

According to some embodiments, the printed circuit board, also known as printed wiring board, or simply printed board, is a finished board that employs insulating substrate and conductor materials to design and produce conductive patterns such as printed wiring, printed elements, or a combination of both, according to a pre-designed schematic circuit diagram. A main function of the printed circuit board is to isolate copper foil conductive layers on the surface through a substrate insulating material, to achieve interconnection and relay transmission between the electronic elements. This allows current to perform functions such as amplification, attenuation, modulation, decoding, and encoding along a preset circuit among various electronic elements, thereby achieving interconnection and relay transmission between the electronic elements.

According to some embodiments, the printed circuit board further includes a gate region, a source region, and a drain region, wherein
the gate region, the source region, and the drain region are all disposed on the copper substrate;
the drain of the transistor Q1 and the cathode of the diode are connected to the drain region through the copper substrate;
the source of the transistor Q1 and the anode of the diode are connected to the source region through aluminum wires; and
a gate of the transistor Q1 is connected to the gate region through an aluminum wire.

According to some embodiments, the gate region, the source region, and the drain region can be directly welded to the copper substrate. An area of the drain region can be greater than an area of the gate region and an area of the source region.

In some embodiments, the drain of the transistor Q1 and the cathode of the diode are connected to the drain region through the copper substrate, the source of the transistor Q1 and the anode of the diode are connected to the source region through the aluminum wires, and the gate of the transistor Q1 is connected to the gate region through the aluminum wire. Therefore, the source of the transistor Q1 and the anode of the diode can be connected to the source region and the gate of the transistor Q1 can be connected to the gate region without the need of a circuit printed on the printed circuit board, and an area of the printed circuit board required to be occupied by the plurality of diodes and the transistor Q1 can be decreased.

According to some embodiments, the power semiconductor module further includes a gate pin, a source pin, and a drain pin, wherein the gate pin is disposed in the gate region, the source pin is disposed in the source region, and the drain pin is disposed in the drain region.

In some embodiments, by disposing the gate pin, the source pin, and the drain pin, the power semiconductor module can be conveniently connected to an external device.

A scenario is taken as an example. As shown in FIG. 2, the gate pin is connected to a gate of the IGBT chip through an aluminum wire, the source pin is connected to an anode of the FRD chip on the left of the IGBT chip, a source of the IGBT chip is connected to the anode of this FRD chip through four bonding wires, and the drain pin is connected to a drain of the IGBT chip and a cathode of the FRD chip through the copper substrate.

In conclusion, according to the power semiconductor module provided by the embodiments of the present application, during use of the power semiconductor module, when the duration of current flow through the diode remains unchanged, a lower on-state voltage drop of the diode results in lower loss caused by the current flow through the diode, and thus lower loss of the power semiconductor module. Therefore, by configuring the area occupied by the at least one diode to be greater than the area occupied by the transistor, the on-state voltage drop of the diode is reduced, thereby reducing the loss of the power semiconductor module, improving the operating efficiency of the power semiconductor module, and increasing the power generation efficiency.

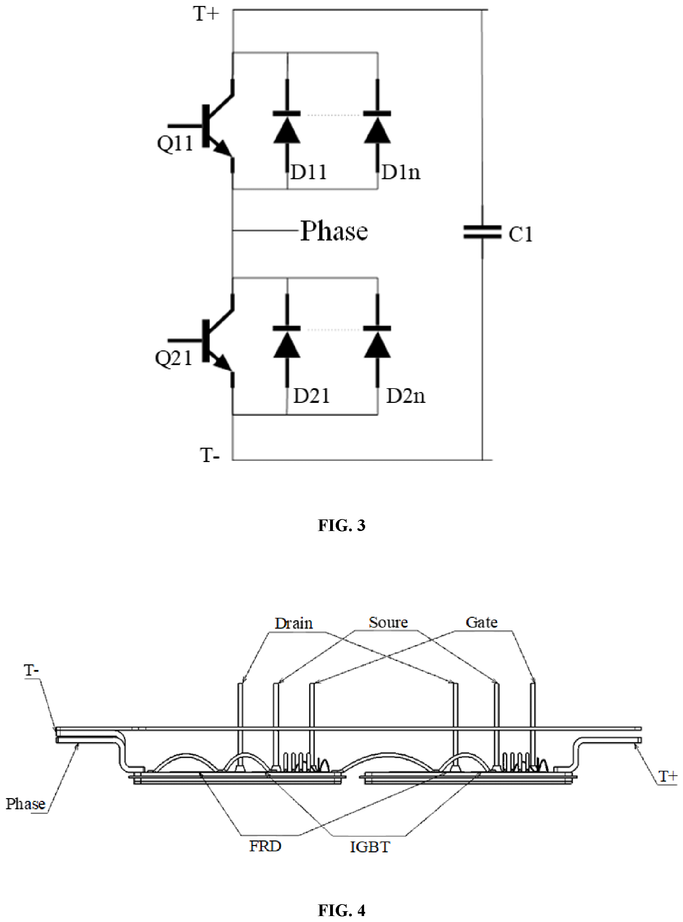

According to the embodiments of the present application, the present application further provides a half-bridge power module. FIG. 3 is a circuit diagram of the half-bridge power module according to embodiments of the present application. As shown in FIG. 3, the half-bridge power module includes a first power semiconductor module and a second power semiconductor module, wherein the first power semiconductor module and the second power semiconductor module each adopt the power semiconductor module according to any of the above-mentioned embodiments, and the first power semiconductor module and the second power semiconductor module are connected in series.

According to some embodiments, the first power semiconductor module includes a transistor Q11 and diodes D11 to D1n connected in parallel with Q11. The second power semiconductor module includes a transistor Q21 and diodes D21 to D2n connected in parallel with Q21.

In some embodiments, a source of the first power semiconductor module is connected to a drain of the second power semiconductor module.

Optionally, in an embodiment of the present application, as shown in FIG. 2, a source of a transistor and an anode of a diode in the first power semiconductor module are connected to a drain region of the second power semiconductor module through bonding wires. Therefore, a connecting effect between the first power semiconductor module and the second power semiconductor module can be enhanced.

Optionally, in an embodiment of the present application, as shown in FIG. 2 and FIG. 3, the half-bridge power module further includes a positive terminal T+, a negative terminal T-, and a phase power terminal, wherein
the positive terminal T+ is connected to a drain region of the first power semiconductor module;
the phase power terminal is connected to a drain region of the second power semiconductor module; and
the negative terminal T- is connected to a source region of the second power semiconductor module.

In some embodiments, by disposing the positive terminal T+, the negative terminal T-, and the phase power terminal, an external device can be connected to the half-bridge power module through the positive terminal T+, the negative terminal T-, and the phase power terminal to drive the half-bridge power module.

According to some embodiments, FIG. 4 is a side view of a half-bridge power module according to the embodiments of the present application. As shown in FIG. 2 and FIG. 4, the half-bridge power module further includes an adapter copper busbar and a capacitor C1, wherein the first power semiconductor module and the second power semiconductor module are positioned in a first plane, the adapter copper busbar is positioned in a second plane, and the first plane is parallel to the second plane; and one end of the adapter copper busbar is connected to the negative terminal T-, the other end of the adapter copper busbar is connected to a negative electrode of the capacitor C1 and the other end of the adapter copper busbar is close to the positive terminal T+, and the positive terminal T+ is connected to a positive electrode of the capacitor C1.

According to some embodiments, one end of the adapter copper busbar may also be connected to the positive terminal T+; at this moment, the other end of the adapter copper busbar is connected to the positive electrode of the capacitor C1 and the other end of the adapter copper busbar is close to the negative terminal T-; and the negative terminal T- is connected to the negative electrode of the capacitor C1.

In some embodiments, the adapter copper busbar may be connected to the negative terminal T- or the positive terminal T+ through a laser welding process.

It should be noted that in the related art, the positive terminal T+ and the negative terminal T- of the half-bridge power module are disposed on the same side, and the phase power terminal is disposed on the other side, such that parasitic inductance between the half-bridge power module and the busbar is approximately 12 nH. According to the embodiments of the present application, the phase power terminal and the negative terminal T- are disposed on one side of the half-bridge power module, the positive terminal T+ is disposed on the other side of the half-bridge power module, and the positive terminal T+ and the negative terminal T- are transferred to the same side through the adapter copper busbar parallel to the half-bridge power module and are connected to the capacitor C1. Therefore, a design of a parallel laminated commutation loop achieved through laser welding can reduce the parasitic inductance of the half-bridge power module to 5 nH. By reducing the parasitic inductance, a switching speed of the half-bridge power module can be further increased, the switching loss of the half-bridge power module can be reduced, and the power generation efficiency of the half-bridge power module can be improved.

In conclusion, according to the power semiconductor module provided by the embodiments of the present application, during use of the power semiconductor module, when the duration of current flow through the diode remains unchanged, a lower on-state voltage drop of the diode results in lower loss caused by the current flowing through the diode, and thus lower loss of the power semiconductor module. Therefore, by configuring the area occupied by the at least one diode to be greater than the area occupied by the transistor, the on-state voltage drop of the diode is reduced, thereby reducing the loss of the entire power semiconductor module, improving the operating efficiency of the power semiconductor module, and increasing the power generation efficiency.

According to the embodiments of the present application, the present application further provides a motor controller. The motor controller is an electronic device configured to control motor operation, and controls parameters such as a speed and a torque of a motor by receiving and processing signals. The motor controller can not only be used in an electric vehicle to control the operation of a generator, but also be applied to various fields of industrial automation devices, aerospace devices, and household electrical devices, to maintain normal operation of the devices. The motor controller includes the half-bridge power module according to any of the above-mentioned embodiments, which is helpful for reducing the loss of the motor controller and improving the operating efficiency of the motor controller.

According to the embodiments of the present application, the present application further provides an electric drive system, which can be applied to an electric vehicle and converts electric energy generated by a battery pack into kinetic energy to drive the vehicle forward. The electric drive system includes the motor controller according to the above-mentioned embodiments, which is helpful for reducing the loss of the electric drive system and improving the operating efficiency of the electric drive system.

According to embodiments of the present application, the present application further provides a vehicle. The vehicle may be a pure electric vehicle, and may also be a hybrid vehicle. The vehicle includes the electric drive system in the above-mentioned embodiments, which is helpful for improving the vehicle's range.

The "one embodiment", "an embodiment" or "one or more embodiments" as used herein means that particular features, structures or characteristics described with reference to an embodiment are included in at least one embodiment of the present applicant. Moreover, it should be noted that here an example using the wording "in an embodiment" does not necessarily refer to the same one embodiment.

The description provided herein describes many concrete details. However, it can be understood that the embodiments of the present applicant may be implemented without those concrete details. In some of the embodiments, well-known processes, structures and techniques are not described in detail, so as not to affect the understanding of the description.

In the claims, any reference symbols placed between parentheses shall not be construed as limiting the claim. Furthermore, the terms "first" and "second" are used for descriptive purposes only and should not be understood as indicating or implying relative importance or implicitly specifying the number of the indicated technical features. Thus, a feature defined as "first" or "second" may explicitly or implicitly include at least one of that feature. In the description of the present application, "plurality" means at least two, such as two, three, etc., unless otherwise expressly and specifically defined.

Finally, it should be noted that the above embodiments are merely intended to explain the technical solutions of the present applicant, and not to limit them. Although the present applicant is explained in detail with reference to the above embodiments, a person skilled in the art should understand that he can still modify the technical solutions set forth by the above embodiments, or make equivalent substitutions to part of the technical features of them. However, those modifications or substitutions do not make the essence of the corresponding technical solutions depart from the spirit and scope of the technical solutions of the embodiments of the present applicant.

## Claims

1. A power semiconductor module, **characterized by** comprising a transistor and at least one diode, wherein
a drain of the transistor is connected to a cathode of the diode, and a source of the transistor is connected to an anode of the diode; and
an area occupied by the at least one diode is greater than an area occupied by the transistor.

2. The power semiconductor module according to claim 1, **characterized in that** a number of the diode is plural.

3. The power semiconductor module according to claim 2, **characterized in that** the plurality of diodes are placed around the transistor; wherein one diode is disposed in any direction of the transistor, and if the diodes are disposed in all directions of the transistor, a diode is disposed in a direction away from the transistor relative to any diode disposed in any direction.

4. The power semiconductor module according to claim 1, **characterized in that** the power semiconductor module further comprises a printed circuit board, wherein
the at least one diode and the transistor are disposed on a copper substrate of the printed circuit board.

5. The power semiconductor module according to claim 4, **characterized in that** the printed circuit board further comprises a gate region, a source region, and a drain region;
the gate region, the source region, and the drain region are all disposed on the copper substrate;
the drain of the transistor and the cathode of the diode are connected to the drain region through the copper substrate;
the source of the transistor and the anode of the diode are connected to the source region through aluminum wires; and
a gate of the transistor is connected to the gate region through an aluminum wire.

6. The power semiconductor module according to claim 5, **characterized in that** the power semiconductor module further comprises a gate pin, a source pin, and a drain pin, wherein
the gate pin is disposed in the gate region, the source pin is disposed in the source region, and the drain pin is disposed in the drain region.

7. A half-bridge power module, **characterized by** comprising a first power semiconductor module and a second power semiconductor module, wherein the first power semiconductor module and the second power semiconductor module each adopt the power semiconductor module according to any one of claims 1 to 6, and
the first power semiconductor module and the second power semiconductor module are connected in series.

8. The half-bridge power module according to claim 7, **characterized in that** a source of a transistor and an anode of a diode in the first power semiconductor module are connected to a drain region of the second power semiconductor module through bonding wires.

9. The half-bridge power module according to claim 8, **characterized in that** the half-bridge power module further comprises a positive terminal, a negative terminal, and a phase power terminal, wherein
the positive terminal is connected to a drain region of the first power semiconductor module;
the phase power terminal is connected to the drain region of the second power semiconductor module; and
the negative terminal is connected to a source region of the second power semiconductor module.

10. The half-bridge power module according to claim 9, **characterized in that** the half-bridge power module further comprises an adapter copper busbar and a capacitor, wherein
the first power semiconductor module and the second power semiconductor module are positioned in a first plane, the adapter copper busbar is positioned in a second plane, and the first plane is parallel to the second plane; and
one end of the adapter copper busbar is connected to the negative terminal, the other end of the adapter copper busbar is connected to a negative electrode of the capacitor and the other end of the adapter copper busbar is close to the positive terminal, and the positive terminal is connected to a positive electrode of the capacitor; or, one end of the adapter copper busbar is connected to the positive terminal, the other end of the adapter copper busbar is connected to the positive electrode of the capacitor and the other end of the adapter copper busbar is close to the negative terminal, and the negative terminal is connected to the negative electrode of the capacitor.

11. A motor controller, **characterized by** comprising the half-bridge power module according to any one of claims 1 to 10.

12. An electric drive system, **characterized by** comprising the motor controller according to claim 11.

13. A vehicle, **characterized by** comprising the electric drive system according to claim 12.
